# EUROPEAN PATENT APPLICATION

(11) **EP 0 938 848 A1**
(43) Date of publication of application: **01.09.1999**
(21) Application number: 98200164.6
(22) Date of filing: 21.01.1998
(51) Int. Cl.: A23L 1/00, A23G 1/00, A23G 3/00

(54) **Milk-based spreadable product**

(71) Applicant: SOCIETE DES PRODUITS NESTLE S.A., 1800 Vevey (CH)
(72) Inventor: Reinl, Hubert, 8261 Tuessling (DE); Boxler, Uwe, 85417 Marzling (DE); Roth, Thomas, 84453 Muehldorf am Inn (DE)
(74) Representative: Thomas, Alain

(57) **Abstract**

A milk-based spreadable product comprising milk, sugar, fat and emulsifier which provides a total milk solids amount of 14% to 35%. The invention also pertains to a spreadable product having coloured phases as well as to the processes for making same.

## Description

The present invention relates to improved spreads. More specifically, the present invention relates to a milk-based spreadable product comprising milk, sugar, fat and emulsifier. It relates as well to a spreadable product having coloured phases and processes for making it.

### Background of the invention

At present, soft spreads containing milk, among other things, are known. Most of the milk-based spreads currently on the market contain large amounts of sugar, up to 54%, but low levels of milk. Products exist with low sugar content but these products are not satisfactory from an organoleptic point of view.

The article "Zucker-milchpaste" taken out of "Deutsche Molkerei Zeitung" (94(33), 1337-1339, 1973) describes a composition for a spread containing "Milchhonig" which is a mix of milk powder and honey. This product has a marked sugar taste, which is unpleasant. Another problem with such compositions is their low milk content because milk products are essential in a human diet.

### Summary

It is an object of the invention to provide a milk-based, spreadable product which has a relatively high milk solids content and which has good organoleptic properties.

Accordingly, in one aspect, this invention provides a milk-based spreadable product comprising milk, sugar, fat and emulsifier which has a total milk solids content of about 14% to about 35%.

The spreadable product has the advantage that its sugar content may be significantly reduced without adversely affecting its flavour. Also, it may have a relatively high milk content. Further, despite the low sugar levels and relatively high milk levels, the product may have a good shelf stability; even without the use of preservatives. Also, the product may be spreadable at any temperature in the range of 10°C to 30°C.

In another aspect, this invention provides a process for the production of a milk-based, spreadable product, the process comprising:
i) thermally treating sugar, fat and emulsifier to provide a treated mixture;
ii) mixing the treated mixture and a sugared condensed milk to provide a homogenized paste which contains about 14% to about 35% total milk solids;
iii) filling the homogenized paste into a container.

In further aspect, this invention provides a process for the production of a milk-based, spreadable product, the process comprising:
i) thermally treating sugar, fat and emulsifier to provide a treated mixture;
ii) mixing the first treated mixture and a sugared condensed milk to provide a first homogenized paste which contains about 14% to about 35% total milk solids;
iii) thermally treating sugar, fat and emulsifier to provide a second treated mixture;
iv) mixing the treated mixture and a sugared condensed milk to provide a second homogenized paste which contains about 14% to about 35% total milk solids but which has a colour different from the first homogenized paste;
v) filling the homogenized pastes into a container to provide a spreadable product having at least two colours.

### Detailled description of the invention

Embodiments of the invention are now described, by way of example only. In this specification, all percentages are given on the basis of weight except where specifically stated otherwise. Also the term "total milk solids" means the solids normally found in milk including lactose, fat, casein and other milk proteins. It can be measured with analytical biochemical methods.

The amount of milk solids is preferably about 20% to about 25%. It can be obtained by using condensed milk, for example and preferably using sugared condensed milk. The milk level can be increased up to 35% by using a condensed milk having a lower water or sugar content either in a doughy or in a powdery form.

The sugared condensed milk may have a dry mater content of about 70-80%. The amount of added sugared condensed milk may be, for example, from 50% to 65% by weight based on the weight of the final mixture. When sugared condensed milk is used, care must be taken. During the heating normally necessary for microbiological treatment, the lactose undergoes crystallisation. So as to prevent its crystallisation, the sugared condensed milk is treated separately from the other ingredients. These ingredients may comprise invert sugar, milk powder, vegetable fat and an emulsifier.

Sugar may be added preferably in the form of liquid sugar and it can be invert sugar syrup. Invert sugar syrup may be added in the recipe from 2% to 25% and preferably from 5% to 7%.

In addition to the sugared condensed milk, milk powder with or without fat may be added to the mixture from 1% to 10%.

The fat is preferably vegetable fat, liquid or at least jelly at room temperature. The vegetable fat may be a rapeseed, sunflower or palm oil or a mixture thereof. The vegetable fat may be added in the proportion of 15% to 30%. As an emulsifier, lecithins may be used, and preferably soya lecithin, in the amount of 0.03-0.1%.

The water content in the mixture is preferably about 13% to 18%. This amount of water in the preparation gives a smooth and soft mouth feel which is different from the prior chocolate spreads. The total fat content is about 20% to 35% and preferably about 32%.
The water activity is preferably below 0.82 and this provides a good shelf stable product. The use of preservatives is not necessary, but potassium sorbate, for example, may be added.

The milk-based product may be used for preparing spreadable products, which have higher milk content that can increase milk consumption in a human diet. One of these product may contain, for example, 14% to 35% milk solids, 15% to 30% vegetable fat, 25% to 40% total sugar and emulsifier. Its water content is about 13% to 18%.

The product can have multiple coloured phases. It can be composed of stripes of the 2 different phases in order to create an optical difference in the spread. The ratio white phase: brown phase for this product can be 5:5, 4:6 to 6:4, for example.

A white phase may be prepared, and a brown one with cocoa or hazelnut. Each of said phase preferably contains at least 50% sugared condensed milk, 2% to 25% invert sugar syrup, 1% to 10% whole milk powder, 15% to 30% vegetable fat, lecithin and flavour. The white phase preferably contains 60-65% sugared condensed milk, 2-10% invert sugar syrup, 2-5% whole milk powder, 25-30% vegetable fat, lecithin and flavour.
The "cocoa" brown phase may contain 60-65% sugared condensed milk, 3-10% invert sugar syrup, 22-30% vegetable fat, 4-8% cocoa, skim milk powder, lecithin and flavour. The "hazelnut" brown phase preferably contains 60-65% sugared condensed milk, 15-20% vegetable fat, 3-10% invert sugar syrup, 8-10% hazelnut paste, 3-7% cocoa and flavour.

This product can be filed in tubes or in other containers.

The spreadable product may be prepared as follows: The sugared condensed milk is put in a tank. In this tank, the sugared condensed milk should be kept at a temperature below 60°C to avoid the building up of sugar crystals, and preferably between 10°C to 20°C.

All the other ingredients are treated in a separate tank wherein they are mixed, aerated and heat treated in order to pasteurize the milk powders, cocoa, maltodextrin, etc... The heating of the "all other ingredients" stream may be carried out batchwise in an hopper agitated. The temperature in this tank is preferably 75°C to 85°C.

The content of both tanks is fed to a mixer.
The mixer is preferably a loop mixer with shear unit and a jacket. The mixing step in the loop mixer provides an homogenous paste of all the ingredients so as to get the right consistency. The temperature range in the mixer should not exceed 60°C and be preferably 45°C to 55°C.

Then the paste can be cooled. A scrapped surface heat exchanger (SSHE) or a triplex pipe may perform this cooling step.

After cooling, the final product can be filled in four stripes for example, preferably in tubes and especially in tubes containing 200 g. Children comfortably handle a package of this size. Also since the exact amount needed is easily dispensed, waste is minimized during use.

The invention will be illustrated by the following examples non-limitative examples.

### Example 1

To obtain a brown and white chocolate composition the two phases are prepared as follow:
For the white phase:
   62% sugared condensed milk is mixed with a pasteurized mixture of 5% invert sugar syrup, 3% whole milk powder containing 26% of fat, 27% vegetable fat, 2% maltodextrin, soya lecithin and vanilla aroma.
For the brown phase:
   62% sugared condensed milk is mixed with a pasteurized mixture of 6% invert sugar syrup, 0.4% skim milk powder, 25% vegetable fat, 6% cocoa, soya lecithin and vanilla aroma.

The mixing step in the loop mixer provides an homogenous paste, which is then cooled by a scrapped surface heat exchanger or a triplex pipe.
After cooling, the final product is filled in four stripes in 200g tubes. The ratio white phase/brown phase is 4:6.
The white phase has a milk solids content of 23%, and the brown phase has a milk solids content of 19,6%. The product is tasted and has a good flavour and mouth feel.

### Example 2

To obtain a brown and white hazelnut spreadable product the two phases are prepared as example 1 with the following proportions:
White phase:
   62% sugared condensed milk, 5% invert sugar syrup, 3% whole milk powder, 27% vegetable fat, 2% maltodextrin, soya lecithin and vanilla aroma.
Brown phase:
   62% sugared condensed milk, 6% invert sugar syrup, 9% hazelnut paste, 18% vegetable fat, and 5% cocoa, vanilla aroma.
The ratio white phase/brown phase is 5:5.

### Example 3

White phase:
   62% sugared condensed milk is mixed with a pasteurized mixture of 5% invert sugar syrup, 3% whole milk powder, 2% maltodextrin, vanilla aroma and soya lecithin.
Brown phase:
   50% sugared condensed milk, 18% vegetable fat, 12% cocoa, 20% invert sugar syrup, vanilla aroma and soya lecithin.
The ratio white phase/brown phase is 4:6.

## Claims

1. A milk-based spreadable product comprising milk, sugar, fat and emulsifier which provides a total milk solids amount of 14% to 35%.

2. A product according claim 1 wherein the milk is in the form of condensed milk or sugared condensed milk.

3. A product according claim 1 which has a water activity is below 0.82.

4. A product according any one of claims 1 to 3 comprising from 20% to 25% milk solids.

5. A product according any one of claims 1 to 4 comprising from 15% to 30% vegetable fat, from 25% to 40% total sugar and from 13% to 18% water.

6. A product according any one of claim 1 to 5, wherein the sugar is added invert sugar syrup and lactose, and the vegetable fat is a liquid vegetable fat at room temperature.

7. A product according any one of claim 1 to 6, having a white phase and a brown phase, each of said phase containing at least 50% sugared condensed milk, 2% to 25% invert sugar syrup, 1% to 10% whole milk powder, 15% to 30% vegetable fat, lecithin and flavour.

8. A product according claim 7 wherein the white phase contains 60-65% sugared condensed milk mixed with a pasteurized mixture of 2-10% invert sugar syrup, 2-5% whole milk powder, 25-30% vegetable fat, lecithin and flavour and the brown phase contains 60-65% sugared condensed milk mixed with a pasteurized mixture of 3-10% invert sugar syrup, 22-30% vegetable fat, 4-8% cocoa, skim milk powder, lecithin and flavour.

9. A product according claim 7 wherein the white phase contains 60-65% sugared condensed milk mixed with a pasteurized mixture of 2-10% invert sugar syrup, 2-5% whole milk powder, 25-30% vegetable fat, lecithin and flavour, and the brown phase contains 60-65% sugared condensed milk mixed with a pasteurized mixture of 15-20% vegetable fat, 3-10% invert sugar syrup, 8-10% hazelnut paste, 3-7% cocoa and flavour.

10. A process for the production of a milk-based, spreadable product, the process comprising:
i) thermally treating sugar, fat and emulsifier to provide a treated mixture;
ii) mixing the treated mixture and a sugared condensed milk to provide a homogenized paste which contains 14% to 35% total milk solids;
iii) filling the homogenized paste into a container.

11. A process for the production of a milk-based, spreadable product have at least two coloured phases comprising:
i) thermally treating sugar, fat and emulsifier to provide a treated mixture;
ii) mixing the first treated mixture and a sugared condensed milk to provide a first homogenized paste which contains 14% to 35% total milk solids;
iii) thermally treating sugar, fat and emulsifier to provide a second treated mixture;
iv) mixing the first treated mixture and a sugared condensed milk to provide a second homogenized paste which contains 14% to 35% total milk solids but which has a colour different from the first homogenized paste;
v) filling the homogenized pastes into a container to provide a spreadable product having at least two colours.
